# EUROPÄISCHE PATENTANMELDUNG

(11) **EP 2 258 580 A2**
(43) Veröffentlichungstag der Anmeldung: **08.12.2010**
(21) Anmeldenummer: 10003608.6
(22) Anmeldetag: 31.03.2010
(51) Int. Cl.: B60L 3/12

(54) **Verfahren zum Ermitteln des Momentanverbrauchs eines Fahrzeugs**

(30) Priorität: 02.05.2009 DE 102009019810
(71) Anmelder: Bayerische Motoren Werke, 80809 München (DE)
(72) Erfinder: Nehse, Wolfgang, 86934 Reichling (DE)

(57) **Zusammenfassung**

Verfahren zur Ermitteln des Momentanverbrauchs eines Fahrzeugs, das mindestens einen Antriebsmotor und mindestens einen Energiespeicher aufweist, in dem Energie zum Betreiben des Antriebsmotors speicherbar ist. Eine Änderung der in dem mindestens einen Energiespeicher gespeicherten Energie sowie eine Änderung der kinetischen Energie und/oder eine Änderung der potentiellen Energie des Fahrzeugs werden zu einem Momentanverbrauch miteinander verknüpft.

## Beschreibung

Die vorliegende Erfindung betrifft ein Verfahren zum Ermitteln des Momentanverbrauchs eines Fahrzeugs gemäß dem Oberbegriff des Patentanspruches 1.

Bereits seit vielen Jahren gibt es Fahrzeuge, die mit einem Bordcomputer ausgestattet sind, der zusätzlich zum Durchschnittsverbrauch des Fahrzeugs näherungsweise den Momentanverbrauch ermittelt. Bei Fahrzeugen mit Verbrennungsmotor ergibt sich der Momentanverbrauch aus dem momentan ermittelten Kraftstoffvolumenstrom, welcher dem Verbrennungsmotor zugeführt wird, und der Fahrgeschwindigkeit. Manche Algorithmen zur Ermittlung des Momentanverbrauchs arbeiten z. B. in der Warmlaufphase des Verbrennungsmotors mit zusätzlichen Korrekturfaktoren. Ferner gibt es Systeme, bei denen bei stehendem Fahrzeug anstatt "Unendlich" ein Momentverbrauch von "Null" angezeigt wird. Bei Hybridfahrzeugen wiederum gibt es spezielle Momentanverbrauchsanzeigen, die auch im reinen Elektrobetrieb einen nach einem bestimmten Algorithmus ermittelten "Verbrauchswert" anzeigen.

Bei herkömmlichen Momentanverbrauchsanzeigesystemen kann der Fahrer nur bei Konstantfahrt ersehen, wie verbrauchsgünstig seine Fahrweise tatsächlich ist.

Bei Beschleunigungsvorgängen hingegen ist für den Fahrer anhand der Momentanverbrauchsanzeige nur schwer abschätzbar, welcher Anteil des angezeigten Momentanverbrauchswerts in die Erhöhung der kinetischen Energie des Fahrzeugs fließt, und somit zumindest teilweise rekuperierbar ist. Beim zügigen Beschleunigen werden dem Fahrer also hohe Verbrauchswert angezeigt, obwohl er "verbrauchsgünstig" unterwegs ist. Unter Verbrauchsgesichtspunkten kann es aber durchaus sinnvoller sein, kurzzeitig stark zu beschleunigen und dann rasch in einen verbrauchsgünstigeren Gang hochzuschalten, als bei sehr niedriger Drehzahl langsam und sehr lange zu beschleunigen.

Bei Hybridfahrzeugen wird bisweilen zum Laden des elektrischen Energiespeichers der Lastpunkt des Verbrennungsmotors angehoben, was unmittelbar zu einem Anstieg des momentanen Kraftstoffverbrauchs führt, ohne dass der Fahrer dies anhand einer Beschleunigung des Fahrzeugs oder in anderer Weise bemerkt. Würde man den erhöhten Kraftstoffverbrauch "ungefiltert" als zusätzlichen Momentanverbrauch anzeigen, so kann dies für den Fahrer irritierend sein. Auch aus physikalischer Sicht ist eine Interpretation als zusätzlicher Momentanverbrauch nur teilweise richtig, da zumindest ein Großteil der im Kraftstoff gespeicherten Energie, die bei einer Lastpunktanhebung zusätzlich verbraucht wird, in elektrische Energie umgewandelt wird und somit über die elektrische Maschine des Hybridfahrzeugs als Antriebsenergie abrufbar ist.

Umgekehrt wäre es irritierend, während eines rein elektrischen Fahrbetriebs einen Momentanverbrauch von "Null" anzuzeigen, da sich während des elektrischen Fahrens der elektrische Energiespeicher entsprechend entlädt.

Aufgabe der Erfindung ist es, ein Verfahren zum Ermitteln des Momentanverbrauchs eines Fahrzeugs anzugeben, das sowohl bei herkömmlichen Fahrzeugen mit Verbrennungsmotor als auch bei anderen Fahrzeugen, wie z. B. Hybrid- oder reinen Elektrofahrzeugen, anwendbar ist und das für den Fahrer schlüssig und nachvollziehbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zum Ermitteln des Momentanverbrauchs eines Fahrzeugs, das mindestens einen Antriebsmotor und mindestens einen Energiespeicher aufweist, in dem Energie zum Betreiben des mindestens einen Antriebsmotors speicherbar ist.

Bei dem Fahrzeug kann es sich beispielsweise um ein herkömmliches Fahrzeug mit Verbrennungsmotor, um ein Hybridfahrzeug im Sinne eines Fahrzeugs mit einem Verbrennungsmotor und mindestens einem zur Erzeugung von Vortrieb vorgesehenen Elektromotor handeln oder aber auch um ein Elektrofahrzeug, dessen elektrischer Antriebsmotor von einer Batterie, einer Kondensatoranordnung oder einer Brennstoffzelle mit elektrischer Energie versorgt wird.

Der Grundgedanke der Erfindung besteht darin, dass der Momentverbrauch
a) unter Berücksichtigung der von dem bzw. den Antriebsmotor(en) momentan verbrauchten und der über den bzw. die Antriebsmotor(en) momentan rekuperierten Energie ermittelt wird, was näherungsweise der momentanen Änderung der in dem bzw. den Energiespeicher(n) des Fahrzeugs gespeicherten Energie entspricht, und
b) zusätzlich unter Berücksichtigung der momentanen Änderung der kinetischen Energie des Fahrzeugs (dEₖᵢₙ/dt) und/oder der momentanen Änderung der potentiellen Energie des Fahrzeugs.

Der unter a) und b) verwendete Begriff "momentan" bzw. "momentanen" ist nicht im streng mathematischen Sinne eines zeitlichen Differentials einer bestimmten Größe zu verstehen. Vielmehr kann auch mit Werten gearbeitet werden, die den zeitlichen Differentialen angenähert sind.

Gemäß der Erfindung geht eine Verringerung der in dem mindestens einen Energiespeicher gespeicherten Energie momentanverbrauchserhöhend in den Momentanverbrauch ein, und umgekehrt.

Je mehr der im Fahrzeug vorhandenen "Energiespeicher" in dem Algorithmus zur Ermittlung des Momentanverbrauchs berücksichtigt werden, umso genauer kann der tatsächliche Momentanverbrauch ermittelt werden. Der Begriff "Energiespeicher" umfasst bei einem herkömmlichen Fahrzeug insbesondere den Kraftstofftank bzw. die darin gespeicherte Kraftstoffmenge. Sowohl bei herkömmlichen Fahrzeugen, insbesondere aber bei Hybrid- bzw. Elektrofahrzeugen sollte aber bei der Ermittlung des Momentanverbrauchs auch die Änderung der in dem bzw. den elektrischen Energiespeicher(n) des Fahrzeugs (Batterie- bzw. Kondensatoranordnungen) gespeicherten Energie berücksichtigt werden.

Ein ganz wesentlicher Unterschied gegenüber herkömmlichen Momentanverbrauchsermittlungssystemen ist darin zu sehen, dass gemäß der Erfindung bei der Ermittlung des Momentanverbrauchs unterschieden wird
a) zwischen dem Anteil der Antriebsenergie, der zur Überwindung von Fahrwiderständen eingesetzt wird, und
b) demjenigen Anteil der Antriebsenergie, der beim Beschleunigen zur Erhöhung der kinetischen Energie des Fahrzeugs eingesetzt wird.

Gemäß der Erfindung geht eine Erhöhung der kinetischen Energie des Fahrzeugs momentanverbrauchsmindernd in den Momentanverbrauch ein, und umgekehrt. Dem zu Grunde liegt die Überlegung, dass derjenige Anteil der momentan aufgewendeten Antriebsenergie, der zur Erhöhung der kinetischen Energie des Fahrzeugs aufgewendet wird, nicht verloren, sondern in der Fahrzeugmasse zwischengespeichert ist und somit eigentlich nicht als Momentan-"Verbrauch" anzusehen ist. In Beschleunigungsphasen wird somit bei der Ermittlung des "Momentanverbrauchs" der Energie-, oder genauer gesagt der Leistungsanteil, der momentan für die Erhöhung der kinetischen Energie des Fahrzeugs eingesetzt wird, von der für den Fahrzeugantrieb momentan insgesamt eingesetzten Gesamtleistung subtrahiert.

Wendet man das oben beschriebene Grundprinzip auf Bremsvorgänge an, bei denen das Fahrzeug aktiv, d.h. unter Einsatz der Betriebsbremse gebremst wird, so ist klar, dass einem Bremsvorgang im Schubbetrieb - anders als bei Verbrauchsanzeigesystemen herkömmlicher Fahrzeuge - nicht ein Verbrauch von "Null" zugeordnet werden kann. Beim Bremsen mit der Betriebsbremse wird nämlich kinetische Energie, die teilweise auch als Rotationsenergie im Fahrzeug gespeichert ist, dissipiert, d.h. in Reibungswärme umgewandelt und somit unwiederbringlich an die Umgebung abgegeben.

Folgerichtig wird gemäß der Erfindung bei Bremsvorgängen ein gewisser Momentanverbrauch angezeigt, welcher der Nettobremsleistung entspricht, d.h. der momentanen Verringerung der kinetischen Energie des Fahrzeugs vermindert um einen während des Bremsvorgangs eventuell generatorisch rekuperierten Leistungsanteil. Die bei einem herkömmlichen Fahrzeug über die "Lichtmaschine" bzw. bei einem Hybridfahrzeug über die elektrische Maschine des Hybridantriebs rekuperierte Bremsenergie kann dann zum Laden eines im Fahrzeug vorhandenen elektrischen Energiespeichers verwendet werden. Die Nettobremsleistung könnte unter Berücksichtigung eines durchschnittlichen verbrennungsmotorischen Wirkungsgrades in einen momentanen Kraftstoffverbrauch für den Bremsvorgang, z.B. in Liter pro 100km, umgerechnet werden. Vereinfachend könnte dabei mit der während des Bremsvorgangs vernichteten Leistung dividiert durch einen durchschnittlichen Wirkungsgrad des Verbrennungsmotors gerechnet werden.

Prinzipiell kann auch die potentielle Energie des Fahrzeugs berücksichtigt werden, wobei ganz analog eine Vergrößerung der potentiellen Energie des Fahrzeugs momentan verbrauchsmindernd in den Momentanverbrauch eingerechnet werden müsste, und umgekehrt.

Es versteht sich von selbst, dass miteinander zu verküpfende zeitliche Änderungen von Energien bzw. Energiedurchsätzen zunächst auf eine einheitlich Dimension, wie z.B. KW, Liter pro 100 km, CO₂-Ausstoß in [g/km], Reichweite z.B. in [km], o.ä. umgerechnet werden müssen.

Angezeigt werden kann der gemäß der Erfindung ermittelte Momentanverbrauch z.B. digital in einem Display in Form eines Verbrauchswerts, analog mittels eines Zeigerinstruments in Form eines Verbrauchswerts, qualitativ, z.B. mittels einer Farbskala, o.ä.

Zusammenfassend werden mit der Erfindung folgenden Vorteile erreicht:
- Im Schubbetrieb und insbesondere während Bremsvorgängen wird der Eindruck vermieden, dass der Energieverbrauch des Fahrzeugs "Null" ist. Vielmehr wird die verbrauchte kinetische Energie gegebenenfalls vermindert um evtl. rekuperierte Energieanteile angezeigt.
- Beim Beschleunigen wird der Fahrer angehalten, zügig Geschwindigkeit aufzunehmen und dann rasch hochzuschalten, was energetisch vorteilhaft ist.
- Beim Ausrollen sieht der Fahrer unmittelbar, ob ein Schubbetrieb mit eingelegtem Gang oder ein Ausrollen im Leerlauf energetisch günstiger ist.
- Bei Hybridfahrzeugen wird dem Fahrer noch stärker verdeutlicht, dass auch elektrisches Fahren letztlich mit einem Energieverbrauch verbunden ist.
- Dem Fahrer wird unmittelbar ersichtlich, dass moderates rekuperatives Bremsen im Unterschied zu Bremsvorgängen über die Betriebsbremse vergleichsweise wenig Energie verbraucht.
- Im Unterschied zu herkömmlichen Momentanverbrauchsanzeige-systemen sieht der Fahrer (nicht nur), ob der Antriebsmotor in einem energetisch günstigen Betriebszustand läuft, sondern auch ob der momentane Fahrzustand gesamtenergetisch günstig ist.

## Patentansprüche

1. Verfahren zum Ermitteln des Momentanverbrauchs eines Fahrzeugs, das mindestens einen Antriebsmotor und mindestens einen Energiespeicher aufweist, in dem Energie zum Betreiben des Antriebsmotors speicherbar ist,
**dadurch gekennzeichnet, dass**
eine Änderung der in dem mindestens einen Energiespeicher gespeicherten Energie sowie eine Änderung der kinetischen Energie und/oder eine Änderung der potentiellen Energie des Fahrzeugs zu einem Momentanverbrauch verknüpft werden.

2. Verfahren nach Anspruch 1, **dadurch gekennzeichnet, dass** eine Verringerung der in dem mindestens einen Energiespeicher gespeicherten Energie momentanverbrauchserhöhend in den Momentanverbrauch eingeht, und umgekehrt.

3. Verfahren nach Anspruch 1 oder 2, **dadurch gekennzeichnet, dass** eine Erhöhung der kinetischen Energie des Fahrzeugs momentanverbrauchsmindernd in den Momentanverbrauch eingeht, und umgekehrt.

4. Verfahren nach einem der Ansprüche 1 bis 3, **dadurch gekennzeichnet, dass** eine Änderung der potentiellen Energie des Fahrzeugs in den Momentanverbrauch eingeht, wobei eine Vergrößerung der potentiellen Energie momentanverbrauchsmindernd in den Momentanverbrauch eingeht, und umgekehrt.

5. Verfahren nach einem der vorangehenden Ansprüche 1, **dadurch gekennzeichnet, dass** das Fahrzeug einen Verbrennungsmotor und einen Kraftstofftank aufweist und dass der Momentanverbrauch in Abhängigkeit von dem dem Verbrennungsmotor zugeführten bzw. im Verbrennungsmotor verbrannten Kraftstoffvolumenstrom ermittelt wird.

6. Verfahren nach einem der vorangehenden Ansprüche, **dadurch gekennzeichnet, dass** das Fahrzeug ein elektrische Maschine und einen elektrischen Energiespeicher aufweist, welcher die elektrische Maschine mit elektrischer Energie versorgt und/oder von dieser mit elektrischer Energie geladen wird und dass der Momentanverbrauch in Abhängigkeit von der elektrischen Leistung ermittelt wird, mit der der elektrische Energiespeicher geladen bzw. entladen wird.

7. Verfahren nach einem der vorangehenden Ansprüche, **dadurch gekennzeichnet, dass** das Fahrzeug ein Hybridfahrzeug mit einem Verbrennungsmotor und mindestens einer Vortrieb erzeugenden elektrischen Maschine ist und dass zur Ermittlung des Momentanverbrauchs ein aus dem momentanen Kraftstoffverbrauch resultierender Teilverbrauch und ein aus einer elektrischen Leistung der elektrischen Maschine resultierender Teilverbrauch miteinander verknüpft werden.
